# EUROPÄISCHE PATENTSCHRIFT

(11) **EP 1 307 939 B1**
(45) Veröffentlichungstag und Bekanntmachung des Hinweises auf die Patenterteilung: **21.04.2004**
(21) Anmeldenummer: 01956381.6
(22) Anmeldetag: 21.07.2001
(51) Int. Cl.: H01M 8/10, H01M 4/88

(54) **VERFAHREN ZUR BESCHICHTUNG EINER MEMBRAN-ELEKTRODEN-EINHEIT MIT KATALYSATOR UND VORRICHTUNG DAFÜR**
METHOD FOR COATING A MEMBRANE ELECTRODE UNIT WITH A CATALYST AND DEVICE FOR CARRYING OUT THE METHOD
PROCEDE PERMETTANT D'APPLIQUER UN CATALYSEUR SUR UNE UNITE MEMRBANE- ELECTRODES ET DISPOSITIF PERMETTANT DE METTRE EN OEUVRE LEDIT PROCEDE

(30) Priorität: 04.08.2000 DE 10038862
(43) Veröffentlichungstag der Anmeldung: 07.05.2003
(73) Patentinhaber: FORSCHUNGSZENTRUM JÜLICH GMBH, 52425 Jülich (DE); Hempelmann, Rolf, 66386 St. Ingbert (DE)
(72) Erfinder: HEMPELMANN, Rolf, 66386 St. Ingbert (DE); LÖFFLER, Marc-Simon, 66121 Saarbrücken (DE); SCHMITZ, Heinz, 52428 Jülich (DE); NATTER, Harald, 66117 Saarbrücken (DE); DIVISEK, Jiri, 52428 Jülich (DE)
(86) Internationale Anmeldenummer: PCT/DE2001/002830
(87) Internationale Veröffentlichungsnummer: WO 2002/013301

(56) Entgegenhaltungen:
- DE-C- 19 720 688
- US-A- 5 084 144

## Beschreibung

### Technisches Gebiet

Die Erfindung betrifft ein Verfahren zum Beschichten einer Membran-Elektroden-Einheit einer Brennstoffzelle mit Katalysator sowie eine dafür geeignete Vorrichtung.

### Stand der Technik

Die Membran-Elektroden-Einheit (MEA), die aus sandwichartig angeordneten Schichten Elektrode/Membran/Elektrode zusammengesetzt ist, stellt das zentrale Element einer Brennstoffzelle dar. Für Brennstoffzellen, deren Betriebstemperaturen 0 bis 150 °C betragen, werden ionenleitende Festelektrolyt-Membranen auf Polymerbasis verwendet. Die Anode für die Wasserstoffoxidation und die Kathode für die Sauerstoffreduktion sind vorwiegend mit Platin. Die Anode für die Methanoloxidation der Direkt-Methanol-Brennstoffzelle (DMFC) mit beispielsweise mit Platin-Ruthenium belegt.

Das Prinzip einer Brennstoffzelle ist aus der Druckschrift "K. Kordesch, G. Simander: Fuel Cells and their Applications", VCH Weinheim, 1996", bekannt.

Es werden dort ferner verschiedene Verfahren zur Herstellung von Membran-Elektroden-Einheiten (MEA) für Brennstoffzellen beschrieben. Die katalytisch aktive Schicht befindet sich danach an der Phasengrenze zwischen der Gasdiffusionsschicht (backing layer) und dem Polymerelektrolyten.

Die Aufbringung des Katalysators kann typischerweise auf zwei Wegen erfolgen: Einerseits kann die Elektrode durch Auftragen einer dünnen Platinschicht auf die Diffusionsschicht der Gasdiffusionselektrode aufgebracht werden (Electrochimica Acta 38 (1993) 1661). Andererseits kann die Katalysatorschicht auf die Membran aufgebracht werden, wie es zum erstenmal z.B. im US Patent 3,297,484 dargestellt wurde. Eine ausführliche Darstellung unterschiedlicher Beschichtungsverfahren befindet sich in der Druckschrift Advances in Electrochemical Science and Technology, Volume 5, R. C. Alkire, editor, Wiley-VCH Verlag, Weinheim, 1997.

Die meisten nach diesen Verfahren hergestellten katalytischen Schichten haben eine relativ hohe Katalysatorbelegung mit dem Edelmetall, so daß insbesondere im Falle der DMFC eine so hohe Katalysatorbelegung resultiert, daß das ganze Verfahren unwirtschaftlich erscheint.

Aus US 5,084,144 sowie aus der Druckschrift E. J. Taylor et al., Journal of the Electrochemical Society, Vol. 139 (1992) L45-46 ist ein elektro-chemisches Beschichtungsverfahren zur Herstellung von Gasdiffusioslektroden mit dem Ziel bekannt, eine besonders niedrige Platinbelegung durch hohe Platinausnutzung zu erreichen. Dies erfolgt nach der elektro-chemischen Beschichtungsmethode automatisch, da sich die Metallkeime nur dort abscheiden können, wo sich auch die elektrochemisch aktive Dreiphasengrenze befindet. Verfahrensgemäß wird zur Herstellung einer dünnen, katalytisch aktiven Schicht eine elektrolytische Abscheidung eines Katalysatormetalls aus einem Galvanikbad durchgeführt. Ein Nachteil besteht darin, daß bei diesem Verfahren teure edelmetallhaltige Galvanikbäder erforderlich sind, die aufwendig und kostenintensiv aufgearbeitet werden müssen. Außerdem ist die Nutzung des im Galvanikbad gelösten Edelmetalls sehr beschränkt, so daß die durch optimierte Abscheidung erhaltenen Vorteile beispielsweise durch Spülvorgänge rückgängig gemacht werden.

Um diese Nachteile zu beseitigen, wurde in DE 197 20 688 C1 ein Verfahren vorgeschlagen, bei dem das in der Nafion-Lösung gelöste Edelmetallsalz als eine Precursorschicht zwischen die Diffusionsschicht der Elektrode und die Elektrolytschicht gebracht und anschließend das Edelmetall elektrochemisch zielgerichtet zwischen dem Elektronenleiter und dem Elektrolyten in der aktiven Dreiphasen-Zone abgeschieden wird. Vorteilhaft ist bei diesem Verfahren, daß keine teuren Galvanikbäder mehr erforderlich sind.

Die entsprechenden Reaktionsgleichungen sind:
Kathode (Precursor):

   H₂PtCl₆ + 4 H⁺ + 4e⁻ = Pt⁰ + 6 HCl
Gegenelektrode:

   2 H₂O = 4 H⁺ + 4e⁻ + O₂

Die Ausführung des Verfahrens ist in DE 197 20 688 C1 beschrieben. Da das Verfahren vor allem für Polymerelektrolyt-Membranen als MEA-Elemente einer Brennstoffzelle gedacht ist, muß dabei gewährleistet sein, daß die Membran zur Aufrechterhaltung ihrer Leitfähigkeit während des Beschichtungsverfahrens kontinuierlich mit Wasser befeuchtet wird. Die Membran wird in Kontakt mit flüssigem Wasser gebracht, das Wasser dringt durch die Membran durch und die Membran wird auf dieser Weise stabil im befeuchteten Zustand gehalten. Es hat sich allerdings gezeigt, daß das Wasser teilweise die wasserlöslichen Edelmetallsalze aus der aktiven Zwischenschicht herausspülen kann, so daß hierbei unerwünschte Materialverluste entstehen können. Es ergibt sich daher die Notwendigkeit, diesen Nachteil zu beseitigen.

### Aufgabe und Lösung

Die Aufgabe der Erfindung ist es, ein Verfahren zur Verfügung zu stellen, bei der eine Katalysatorbeschichtung einer Membran für eine Brennstoffzelle derart erfolgt, daß die Menge an einzusetzendem Katalysatormaterial minimiert wird, und eine nahezu vollständige Nutzung des Katalysatormaterials in der Beschichtung gewährleistet wird.

Weiterhin ist es die Aufgabe der Erfindung, eine geeignete Vorrichtung zur Durchführung des oben genannten erfindungsgemäßen Verfahrens zu schaffen.

Die Aufgaben werden gelöst durch ein Verfahren gemäß Hauptanspruch sowie durch eine Vorrichtung gemäß Nebenanspruch. Weitere vorteilhafte Ausführungsformen ergeben sich aus den jeweils rückbezogenen Ansprüchen.

### Darstellung der Erfindung

Das Verfahren zur elektro-chemischen Abscheidung eines Katalysators aus einer Precursorschicht für eine Brennstoffzelle gemäß Anspruch 1 umfaßt die folgenden Schritte:
1. Eine Precursorschicht, die den Katalysator enthält, wird auf eine Membran aufgebracht.
2. Während der Abscheidung befindet sich die Membran ein einer wasserdampfhaltigen Atmosphäre.

Die Precursorschicht im Sinne der Erfindung ist eine Schicht, die das Membranmaterial, z. B. Nafion enthält, und das Katalysatormaterial, z. B. in Form von im Membranmaterial löslichen Salzen, umfaßt.
Katalysatoren, die für einen Einsatz in einer Brennstoffzelle geeignet sind, sind beispielsweise: Edelmetalle (Platin Pt, Ruthenium Ru) in Reinform und/oder auch als Mischungen. Sie katalysieren die elektro-chemische Umsetzungen der Brenn- bzw. Oxidationsmittel in der Brennstoffzelle.

Bei der Membran handelt es sich typischerweise um eine ionenleitende-Festelektrolyt-Membran, z. B. auf Polymerbasis. Ein handelsüblicher Vertreter dieser Membran ist Nafion®. Weitere geeignete Membranen mit ähnlichen Eigenschaften sind z. B. DOW-Membran® oder Neosepta®.

Erfindungsgemäß wurde gefunden, daß es bei der Abscheidung aus einer Precursorschicht ausreicht, die Membran in einer wasserdampfhaltigen Atmosphäre zu halten. Diese Atmosphäre bewirkt, daß die ionische Leitfähigkeit der Membran während der Abscheidung sichergestellt und die Stabilität der Membran gewährleistet ist. Unter einer wasserdampfhaltigen Atmosphäre im Sinne der Erfindung ist eine Atmosphäre mit einem Partialdruck von Wasser von 0,01 - 2,0 bar zu verstehen. Das bedeutet, daß auch schon bei Wassergehalten, die deutlich unterhalb der Sättigung der Atmosphäre liegen, die vorteilhaften Wirklungen auftreten.

Die Abscheidung des metallischen Katalysators findet vorteilhaft nur in dem Bereich statt, in dem sowohl der ionische Kontakt zur Membran als auch ein elektronische Kontakt vorliegen.

Gleichzeitig kann aber bei den erfindungsgemäßen Verfahren auf ein Nachträgliches Spülen, wie es beim Stand der Technik üblich ist, verzichtet werden. Dadurch kommt es auch regelmäßig zu keinerlei Verlust an Katalysatormaterial, wie sie sonst regelmäßig durch die Spülvorgänge eintreten.

Das erfindungsgemäße Verfahren ist apparativ einfach durchzuführen, da lediglich ein temperierbares Gefäß benötigt wird, in der eine wasserdampfhaltige Atmosphäre vorliegt, und in der die elektro-chemische Abscheidung des Katalysators aus der Precursorschicht stattfindet.

Vorteilhaft wird bei dem Abscheideverfahren eine wasserdampfhaltige Luft- oder Stickstoffatmosphäre eingesetzt. Weitere Möglichkeiten einer geeigneten Atmosphäre sind wasserdampfhaltige Schutzgase. Die Atmosphäre sollte keinerlei chemische Reaktionen mit der Membran oder der Precursorschicht eingehen. Beispielsweise sollte bei Verwendung von wasserlöslichen Katalysatormaterial in der Precursorschicht die Atmosphäre nicht reduktive Eigenschaften haben, da der Katalysator undefiniert in der Precursorschicht chemisch abgeschieden werden konnte. Wasserlösliches Katalysatormaterial weist den Vorteil auf, daß es einfach zu handhaben ist und auch in dem Membranmaterial löslich ist.

Um die Partikelgröße der abgeschiedenen Katalysatorteilchen zu kontrollieren, kann entweder das Konstantstrom- oder das Pulsstromverfahren zur Abscheidung eingesetzt werden.

Das Verfahren wird vorteilhaft bei moderaten Temperaturen um Raumtemperatur durchgeführt. Eine obere Temperaturgrenze ergibt sich für den Fachmann aus den eingesetzten Materialien, insbesondere den Katalysatorsalzen. Pt(NO₃) als lösliches Katalysatorsalz zersetzt sich bei ca. 250 °C, während H₂PtCl₆ sich schon bei 50°C zersetzt, so daß diese Temperaturen bei einer Abscheidung mit diesem Katalysatorsalz unterschritten werden sollte.

Die erfindungsgemäße Vorrichtung zur Durchführung des Verfahrens gemäß Nebenanspruch umfaßt:
- ein verschließbares Gefäß,
- Mittel zur Einstellung einer wasserdampfhaltigen Atmosphäre innerhalb des Gefäßes, sowie
- eine Halterung für eine Membran/Precursoreinheit,
- elektrische Kontakte, zur Erzeugung eines elektrisches Feldes in einer in die Halterung eingebrachte Membran/Precursoreinheit.

Ein einfaches, für das Verfahren geeignetes Gefäß ist beispielsweise ein Glasbehälter mit Deckel. Weiterhin umfaßt die Vorrichtung ein Mittel zur Einstellung einer wasserdampfhaltigen Atmosphäre innerhalb des Gefäßes. Dieses Mittel kann in einer Gaszuführung zum Gefäß bestehen, bei welchem das Gas vor dem Eintritt in das Gefäß mit Wasser gesättigt wird, z. B. in Form einer vorgeschalteten Waschflasche. Dabei muß jedoch nicht zwingend eine Sättigung des Gases mit Wasserdampf erreicht werden. Zur elektro-chemischen Abscheidung ist innerhalb des Gefäßes eine Halterung zur Aufnahme der Membran/Precursoreinheit vorgesehen. Die Halterung umfaßt dabei vorteilhaft eine elektrisch leitende Auflage für die Precursorschicht und ein Mittel zur homogenen Verteilung einer elektrischen Ladung auf die Membran, beispielsweise in Form eines Graphitnetzes.

Durch geeignete elektrische Kontakte an der Halterung kann ein elektrisches Feld in der Membran/ Precursoreinheit erzeugt werden.

Vorteilhaft findet die Wasserdampfanreicherung der Atmosphäre direkt im Gefäß statt. Dabei wird Gas, z. B. Stickstoff, über eine Zuleitung an den Boden des Gefäßes geleitet, wobei über dem Austritt eine Wassersäule steht. Das austretende Gas perlt durch geeignete Austrittsöffnungen der Zuleitung (Fritten) durch das Wasser und wird so mit Wasserdampf angereichert. Durch Temperierung kann die Anreicherung verstärkt werden. Dazu kann das Gefäß vorteilhaft temperierbar ausgestaltet sein. Bei dieser Ausführungsform ist darauf zu achten, daß die Halterung für die Membran/Precursoreinheit nicht in direktem Kontakt mit dem Wasser steht und die elektrischen Kontakte entsprechend isoliert sind.

### Beschreibung der Zeichnungen

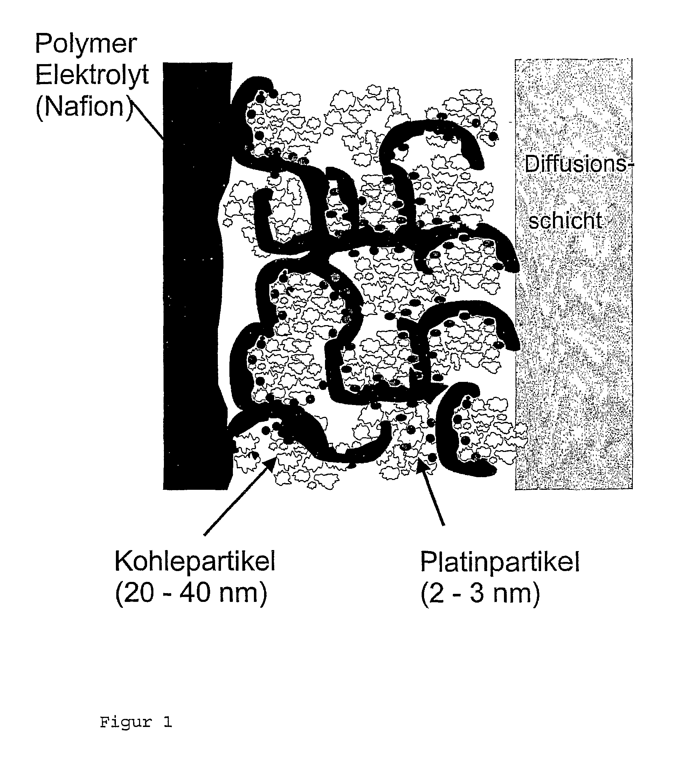

Die Figur 1 zeigt schematisch die katalytisch aktive Zone zwischen der nur Elektronen leitenden backing layer der Elektrode und dem nur Ionen leitenden Elektrolyten (Membran). Nur in dieser Zone kommt es zur Abscheidung des metallischen Katalysators. Einerseits gelangen die Elektronen aus der Elektrode nur bis dorthin, da der Elektrolyt selbst nicht Elektronen leitend ist. Andererseits befinden sich nur in dieser Zone die zunächst ionischen Katalysatorsalze zusammen mit dem Ionen leitenden Elektrolytmaterial. Nur an den Kanälen, die durch das Elektrolytmaterial in dieser Zone gebildet wird (schwarz dargestellte Kanäle) kommt es vorteilhaft zum Kontakt zwischen ionischen Katalysotorteilchen und Elektronen aus der Elektrode und damit zu einer Abscheidung des metallischen Katalysators in Form einzelner Partikel (grau dargestellte Punkte). Zusätzlich sind in dieser Figur Kohlenstoffpartikel eingezeichnet, wie sie beispielsweise bei einer Kohle enthaltenen Precursorprobe auftreten.

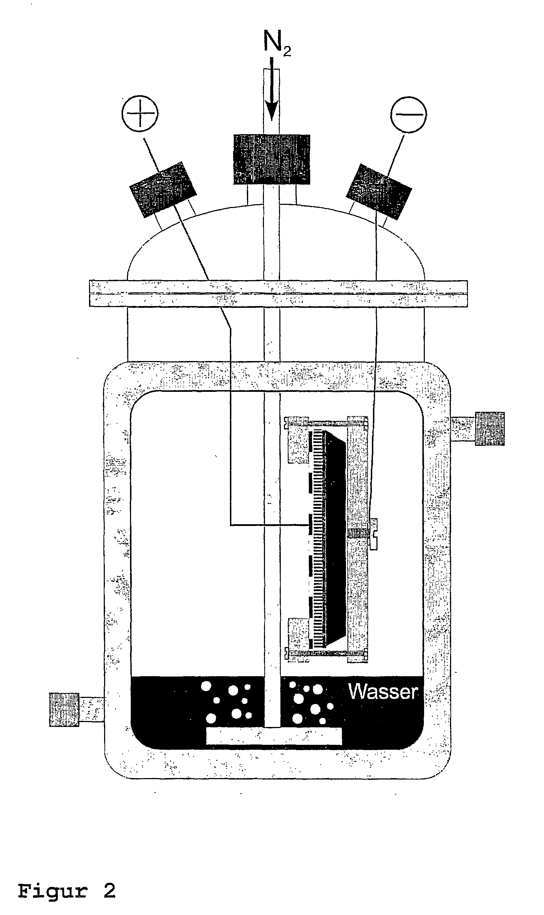

In Figur 2 ist eine mögliche Ausführungsform der erfindungsgemäßen Vorrichtung zur Durchführung des erfindungsgemäßen Verfahrens dargestellt. Die Vorrichtung besteht aus einem verschließbaren und temperierbaren Behälter. Vorteilhaft kann ein solches Glasgefäß eine Waschflasche sein. Der Boden des Gefäßes ist mit Wasser bedeckt. In das Gefäß führt eine Gaszuleitung derart, daß sie das Gas am Boden des Gefäßes durch eine Sprudelvorrichtung (Fritte) zuführt. Dadurch kann sichergestellt werden, daß die oberhalb des Wassers einstellende Gasatmosphäre mit Wasser gesättigt ist. Die Temperierung des Gefäßes und des Wassers sorgen für eine entsprechende Partialdruckeinstellung des Wassers in der Gasphase.

Weiterhin ist eine Haltevorrichtung für die zu bearbeitende Membran mit dem aufgebrachten Precursor oberhalb des Wasserspiegels vorgesehen. Elektrische Kontakte werden von außen in den Behälter an die Haltevorrichtung heran geführt.

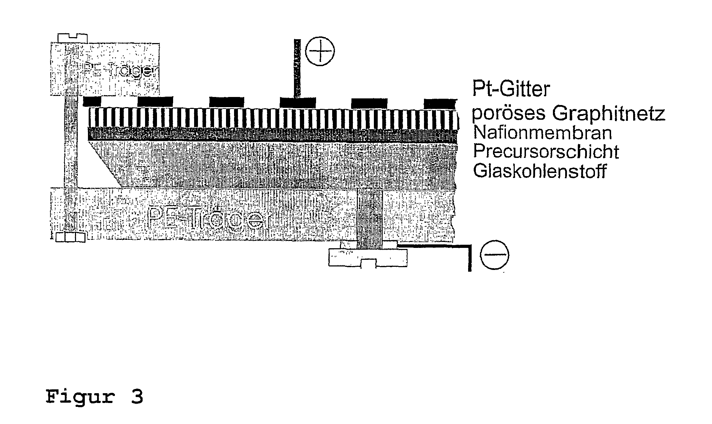

In Figur 3 ist eine Ausführungsform der erfindungsgemäßen Haltevorrichtung detaillierter dargestellt. Dieses Ausführungsbeispiel ist für eine einseitige Katalysatorbeschichtung vorgesehen.

Die Membran/Precursoreinheit wird zwischen eine Glaskohlenstoffschicht und ein Graphitnetz mit aufgelegtem Pt-Gitter zwischen zwei PE-Träger eingeklemmt. Dabei grenzt die Precursorschicht an die Glaskohlenstoffschicht und die Membran an das mit einem Oxidationskatalysator beschichteten Graphitnetz an. Im Fall der einseitigen Beschichtung kann ein PE-Träger als Platte ausgebildet sein. Die Glaskohlenstoffschicht und das Pt-Gitter sind elektrisch kontaktiert. Die Kombination Pt-Gitter und Graphitnetz bewirken eine gleichförmige elektrische Kontaktierung der Membran über die gesamte Oberfläche. Diese Kombination kann auch anders gestaltet werden.

### Ausführungsbeispiele

Das Edelmetallsalz (z. B. Pt-Salz) oder Edelmetallsalz-Gemisch (z. B. Pt/Ru-Salz) wird nach einem geeigneten Verfahren auf die Membran aufgetragen. Es soll ein wasserlösliches Salz verwendet werden, beispielsweise Pt(NO₃)₂ oder H₂PtCl₆ (Hexachloroplatinsäure). Hierbei wird folgendermaßen verfahren:

### 1. Pt(NO₃)₂

Die Platinnitratlösung wird mit der Nafion-Lösung vermischt und auf eine PTFE-Folie gegossen und getrocknet. Anschließend wird die Schicht bei 130 °C auf die Nafion117-Membran gepreßt. Es wurde folgende Precursorprobe erhalten:
Probe 1: 0,5 mg Pt/cm² (10% Nafion)

### 2. Hexachloroplatinsäure

Vulcan XC-72 wird mit der Nafion-Lösung versetzt, vermischt und auf eine Teflonfolie gesprüht. (Nafion-Gehalt: 21,4%)
Die Schicht wird getrocknet und bei 130 °C auf eine Nafion-Membran gepreßt. Danach wird die Teflonfolie abgezogen. Auf die verbliebene Kohleschicht wird eine Mischung von Hexachloroplatinsäure mit Nafion gepinselt und abschließend bei 35 - 40 °C getrocknet.

Es wurde folgende Precursorprobe erhalten:
Vulcan XC-72: 1,73 mg / cm²
Platin: 1,0 mg / cm²
Pt auf Kohle: 36,63%
Nafion-Gehalt: 36,43%

Die mit Platin beschichtete Membran wird so auf einen Kohlenstoffträger aufgebracht, daß die Precursorschicht sich auf der dem Kohlenstoff zugewandten Seite befindet. Die Membran wird mit einem Graphitnetz als Zuleitung auf den Kohlenstoffträger gepreßt. Die erfindungsgemäße Vorrichtung wird in einem mit Wasser gefüllten Gefäß so befestigt, daß sie keinen Kontakt mit flüssigem Wasser hat. Die zur Abscheidung erforderlichen Zuleitungen wird im oberen Teil des Gefäßes angebracht.

Das ganze Gefäß wird mit Stickstoff als Trägergas bespült, der zur Wasserdampfsättigung durch das Wasser hindurch geleitet wird.

Es erfolgt anschließend z. B. eine galvanostatische Edelmetallabscheidung mit gepulstem elektrischen Strom. Als Ergebnis wird eine mit elektrochemisch abgeschiedenem Katalysator beschichtete Membran erhalten, die als MEA in einer Polymerelektrolyt-Brennstoffzelle eingesetzt werden kann. Der Unterschied in der Zusammensetzung der katalytisch aktiven Schicht vor der Abscheidung (kein metallisches Pt) und nach der Abscheidung (metallisches Pt nachgewiesen) wird im Röntgendiffraktogramm in Figur.3 deutlich.

### Gewerbliche Anwendbarkeit

Das erfindungsgemäße Verfahren zur Herstellung einer mit Katalysator beschichteten Membran-Elektroden-Einheit für eine Brennstoffzelle besitzt gegenüber dem Stand der Technik den Vorteil, daß kein aufwendiges Galvanikbad notwendig ist. Im Vergleich mit üblichen Abscheidungen aus einer Precursorschicht weist das erfindungsgemäße Verfahren den Vorteil auf, daß während der Abscheidung kein teures Katalysatormaterial herausgelöst wird. Zudem kann auf die sonst üblichen Spülgänge verzichtet werden, bei denen es regelmäßig zum Verlust des herausgelösten Katalysatormaterials kommt.

Das apparativ einfach durchzuführende Verfahren führt somit zu einer deutlichen Kostenersparnis bei der Herstellung von effektiven mit Katalysator beschichteten Membran-Elektroden-Einheiten durch Reduzierung der benötigten Katalysatormengen.

## Patentansprüche

1. Verfahren zur elektro-chemischen Abscheidung eines Katalysators aus einer Precursorschicht für eine Brennstoffzelle mit den Schritten
- eine Precursorschicht wird in Kontakt zu einer Membran gebracht,
- während der Abscheidung befindet sich die Membran in einer wasserdampfhaltigen Atmosphäre.

2. Verfahren nach vorhergehendem Anspruch,
**gekennzeichnet durch**
eine wasserdampfhaltige Atmosphäre mit einem Wasserpartialdruck im Bereich von 0.01 - 2.0 bar.

3. Verfahren nach einem der vorhergehenden Ansprüche,
**gekennzeichnet durch**
eine wasserdampfhaltige Luftatmosphäre.

4. Verfahren nach einem der vorhergehenden Ansprüche,
**gekennzeichnet durch**
ein wasserlösliches Katalysatorsalz in der Precursorschicht.

5. Verfahren nach einem der vorhergehenden Ansprüche,
**gekennzeichnet durch**
eine Pulsabscheidung.

6. Vorrichtung zur Durchführung des Verfahren nach einem der vorhergehenden Ansprüche umfassend
- ein temperierbares verschließbares Gefäß,
- Mittel zur Einstellung einer wasserdampfhaltigen Atmosphäre innerhalb des Gefäßes,
- eine Halterung für eine Membran/Precursoreinheit,
- elektrische Kontakte, zur Erzeugung eines elektrisches Feldes in einer in die Halterung eingebrachte Membran/Precursoreinheit.

7. Vorrichtung nach vorhergehendem Anspruch
**gekennzeichnet durch**
eine Gaszuführung mit vorgeschalteter Waschflasche als Mittel zur Einstellung einer wasserdampfhaltigen Atmosphäre innerhalb des Gefäßes.

8. Vorrichtung nach Anspruch 6 **gekennzeichnet durch**
- ein Gefäß zur Aufnahme von Wasser,
- eine Gaszuführung, die das Gas zum Boden des Gefäßes leitet, als Mittel zur Einstellung der wasserdampfhaltigen Atmosphäre
- eine Halterung, die so plaziert ist, daß die Membran/Precursoreinheit keinen Kontakt zum Wasser in dem Gefäß hat.

## Claims

1. A method of electrochemically depositing a catalyst from a precursor layer for a fuel cell, comprising the following steps
- a precursor layer is placed in contact with a membrane,
- during the deposition the membrane is situated in an atmosphere which contains water vapour.

2. A method according to the preceding claim,
**characterised by**
an atmosphere which contains water vapour, having a water vapour partial pressure within the range from 0.01 - 2.0 bar.

3. A method according to either one of the preceding claims,
**characterised by**
an atmosphere of air which contains water vapour.

4. A method according to any one of the preceding claims,
**characterised by**
a water-soluble catalyst salt in the precursor layer.

5. A method according to any one of the preceding claims
**characterised by**
pulsed deposition.

6. An apparatus for carrying out the method according to any one of the preceding claims, comprising
- a vessel which can be closed and heated,
- means for producing an atmosphere which contains water vapour inside the vessel,
- a holding device for a membrane/precursor unit,
- electrical contacts for producing an electric field in a membrane/precursor unit which is introduced into the holding device.

7. An apparatus according to the preceding claim,
**characterised by**
a gas feed with an upstream wash bottle as a means for producing an atmosphere which contains water vapour inside the vessel.

8. An apparatus according to claim 6, **characterised by**
- a vessel for receiving water,
- a gas feed which conveys the gas to the base of the vessel, as a means for producing the atmosphere which contains water vapour,
- a holding device which is located so that the membrane/precursor unit has no contact with the water in the vessel.

## Revendications

1. Procédé pour l'application électrochimique d'un catalyseur en une couche de précurseur pour une pile à combustible, comprenant les étapes suivantes:
- mettre une couche de précurseur en contact avec une membrane,
- pendant le dépôt, la membrane se trouve dans une atmosphère contenant de la vapeur d'eau.

2. Procédé selon la revendication précédente, dans lequel l'atmosphère contient de la vapeur d'eau avec une pression partielle d'eau de l'ordre de 0,01 - 2,0 bar.

3. Procédé selon l'une quelconque des revendications précédentes, dans lequel l'atmosphère d'air contient de la vapeur d'eau.

4. Procédé selon l'une quelconque des revendications précédentes, **caractérisé en ce qu'**il utilise un sel de catalyseur soluble dans l'eau dans la couche de précurseur.

5. Procédé selon l'une quelconque des revendications précédentes, dans lequel le dépôt est pulsé.

6. Dispositif pour la mise en oeuvre du procédé selon l'une quelconque des revendications précédentes, comprenant
- une enceinte pouvant être fermée, à équilibrage de la température,
- des moyens pour l'établissement d'une atmosphère contenant de la vapeur d'eau à l'intérieur de l'enceinte,
- un support pour une unité membrane/précurseur,
- des contacts électriques, pour la production d'un champ électrique dans une unité membrane/précurseur placée dans le support.

7. Dispositif selon la revendication précédente, **caractérisé en ce qu'**il comprend une arrivée de gaz précédée par une bouteille de lavage comme moyen d'établissement d'une atmosphère contenant de la vapeur d'eau à l'intérieur de l'enceinte.

8. Dispositif selon la revendication 6, **caractérisé en ce qu'**il comprend
- une enceinte destinée à recevoir de l'eau,
- une arrivée de gaz, qui conduit le gaz au fond de l'enceinte, comme moyen pour établir une atmosphère contenant de la vapeur d'eau,
- un support, qui est placé de telle façon que l'unité membrane/précurseur n'ait aucun contact avec l'eau dans l'enceinte.
